# DEMANDE DE BREVET EUROPEEN

(11) **EP 4 711 280 A1**
(43) Date de publication de la demande: **18.03.2026**
(21) Numéro de dépôt: 25199523.9
(22) Date de dépôt: 02.09.2025
(51) Int. Cl.: B64D 27/40, B64D 27/18

(54) **ENSEMBLE DE PROPULSION COMPRENANT UNE ATTACHE-MOTEUR COMPACTE EN HAUTEUR, AÉRONEF COMPRENANT AU MOINS UN TEL ENSEMBLE DE PROPULSION**

(30) Priorité: 17.09.2024 FR 2409874
(71) Demandeur: AIRBUS OPERATIONS (S.A.S.), 31060 Toulouse (FR)
(72) Inventeur: BERJOT, Michael, 31060 TOULOUSE (FR); PUECH, Jacky, 31060 TOULOUSE (FR); ALRIC, David, 31300 TOULOUSE (FR); CRUAUD-PRIEUR, Solène, 31060 TOULOUSE (FR); POUSSOU, Fabien, 31060 TOULOUSE (FR); NENY, Jérôme, 31060 TOULOUSE (FR)
(74) Mandataire: Fantin, Laurent

(57) **Abrégé**

L'invention a pour objet un ensemble de propulsion comprenant un moteur et au moins une attache-moteur qui relie le moteur et une structure primaire d'un mât et comporte une liaison démontable (62) reliant une poutre transversale (60) et la structure primaire. Cette liaison démontable (62) comprend une première surface de contact (F62) solidaire de la poutre transversale (60), une deuxième surface de contact (F62') solidaire de la structure primaire, au moins un élément de liaison (78) maintenant les première et deuxième surfaces de contact (F62, F62') plaquées l'une contre l'autre, au moins un système de transmission d'efforts transversaux (74) entre le moteur et la structure primaire ainsi qu'au moins une liaison de sécurité en attente (80) distincte de chaque élément de liaison (78) et configurée pour générer un chemin d'efforts additionnel uniquement en cas d'un dysfonctionnement d'un élément de la première liaison démontable (62).

Cette solution permet d'obtenir une attache-moteur compacte en hauteur.

## Description

La présente demande se rapporte à un ensemble de propulsion comprenant une attache-moteur compacte en hauteur ainsi qu'à un aéronef comprenant au moins un tel ensemble de propulsion.

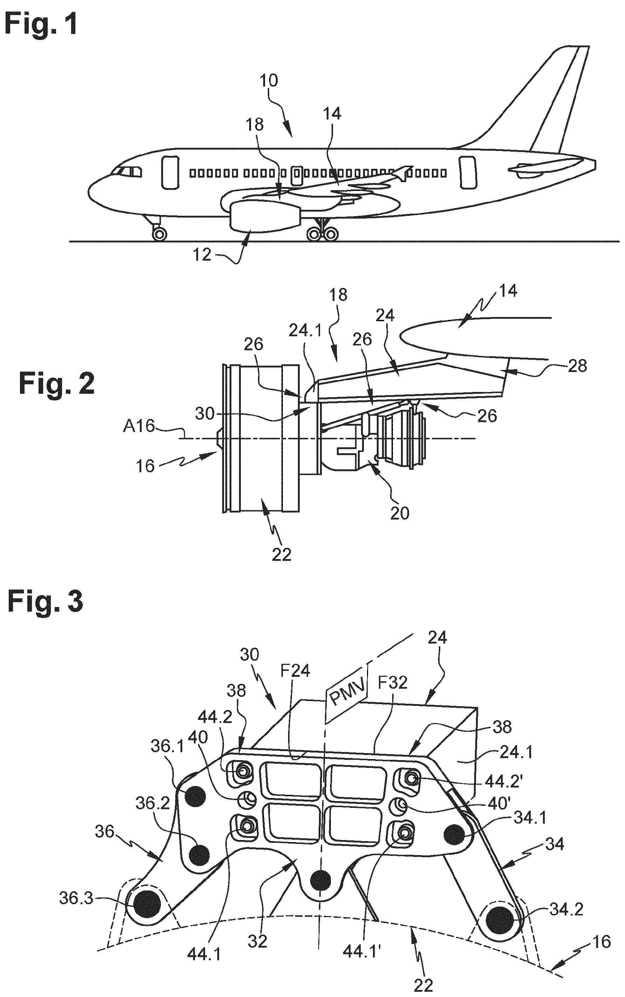

Selon un mode de réalisation visible sur les figures 1 et 2, un aéronef 10 comprend plusieurs ensembles de propulsion 12 positionnés sous chacune des ailes 14 de l'aéronef. Chaque ensemble de propulsion 12 comprend un moteur 16, une nacelle (non représentée sur la figure 2) positionnée autour du moteur 16 ainsi qu'un mât 18 reliant le moteur 16 et l'aile 14. Comme illustré sur la figure 2, le moteur 16 présente un axe de rotation A16 et comprend un cœur de réacteur 20, une soufflante ainsi qu'un carter de soufflante 22 qui a approximativement une forme cylindrique et dans lequel est positionnée la soufflante.

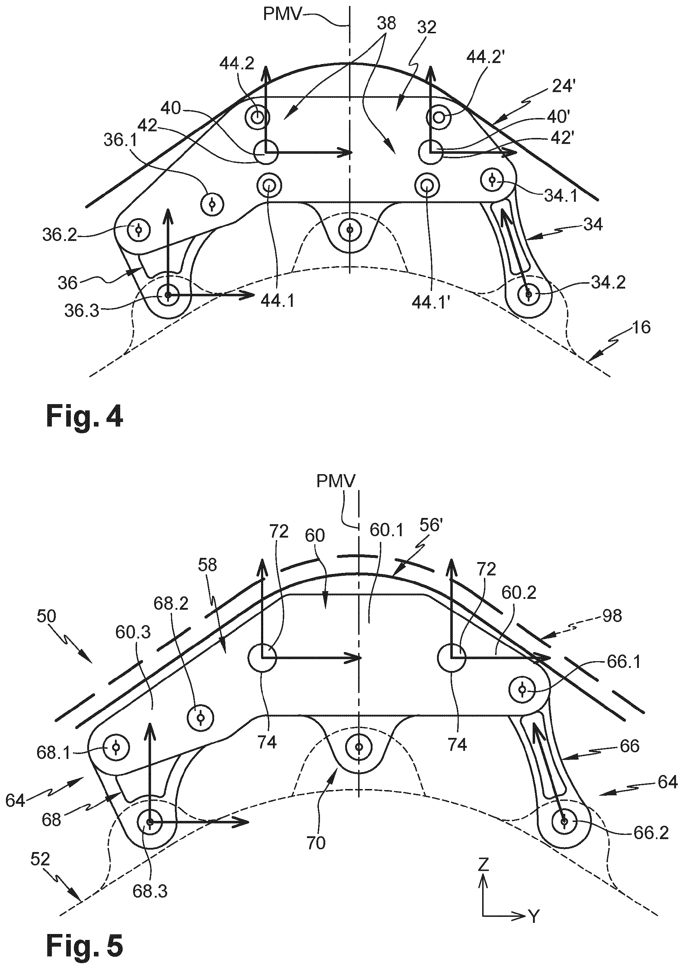

Pour la présente demande, une direction longitudinale X est parallèle à l'axe de rotation A16 du moteur 16, une direction transversale et horizontale Y est horizontale et perpendiculaire à l'axe de rotation A16 du moteur 16, une direction verticale Z est verticale et perpendiculaire à l'axe de rotation A16 du moteur 16. Un plan transversal est perpendiculaire à l'axe de rotation A16 du moteur 16. Un plan médian vertical PVM (visible sur les figures 3 et 4) correspond à un plan vertical passant par l'axe de rotation A16 du moteur 16. Les notions avant et arrière font référence au sens d'écoulement des gaz dans le moteur 16, qui s'écoulent de l'avant vers l'arrière.

Le mât 18 comprend une structure primaire 24 reliée au moteur 16 par un système d'attache-moteur 26 et à l'aile 14 par un système d'attaches voilure 28 ainsi qu'une structure secondaire 24' formant une enveloppe aérodynamique positionnée au-dessus de la structure primaire 24.

Selon un mode de réalisation de l'art antérieur visible sur la figure 2, le système d'attache-moteur 26 comprend, entre autres, une attache-moteur avant 30 reliant l'extrémité avant 24.1 de la structure primaire 24 et le carter de soufflante 22 et/ou le cœur de réacteur 20.

Selon un mode de réalisation de l'art antérieur décrit dans le document FR3098794 et visible sur les figures 3 et 4, l'attache-moteur avant 30 comprend une poutre transversale 32 fixée à l'extrémité avant 24.1 de la structure primaire 24, au moins une première manille à deux points 34 positionnée d'un premier côté du plan médian vertical PMV et reliée par une première articulation 34.1 à la poutre transversale 32 et par une deuxième articulation 34.2 au moteur 16 (au cœur de réacteur 20 ou au carter de soufflante 22) ainsi qu'une deuxième manille à trois points 36 positionnée d'un deuxième côté du plan médian vertical PMV et reliée par des première et deuxième articulations 36.1, 36.2 à la poutre transversale 32 et par une troisième articulation 36.3 au moteur 16 (au cœur de réacteur 20 ou au carter de soufflante 22).

La poutre transversale 32 est reliée à l'extrémité avant 24.1 de la structure primaire 24 par une liaison démontable 38.

La poutre transversale 32 et l'extrémité avant 24.1 de la structure primaire 24 présentent respectivement des première et deuxième surfaces de contact F32, F24 maintenues plaquées l'une contre l'autre grâce à la liaison démontable 38. Cette dernière comprend deux tenons cylindriques 40, 40' de type spigot, positionnés de part et d'autre du plan médian vertical PMV et solidaires de la structure primaire 24, ainsi que des logements cylindriques 42, 42', un pour chaque tenon cylindrique 40, 40', configurés pour loger de manière ajustée les tenons cylindriques 40, 40' et prévus au niveau de la poutre transversale 32. Ces tenons cylindriques 40, 40' présentent des axes sensiblement parallèles à la direction longitudinale X. En complément, la liaison démontable 38 comprend des éléments de liaison 44.1, 44.2, 44.1', 44.2', comme des boulons ou des vis par exemple, positionnés de part et d'autre du plan médian vertical PMV et présentant chacun un axe parallèle à la direction longitudinale. Pour chaque tenon cylindrique 40, 40' de type spigot, la liaison démontable 38 comprend un premier élément de liaison 44.1, 44.1' décalé vers le bas par rapport au tenon cylindrique 40, 40' de type spigot ainsi qu'un deuxième élément de liaison 44.2, 44.2' décalé vers le haut par rapport au tenon cylindrique 40, 40'. Les éléments de liaison sont configurés pour maintenir les première et deuxième surfaces de contact F24, F32 plaquées l'une contre l'autre mais également pour assurer la transmission des efforts entre le moteur 16 et la structure primaire 24, notamment en cas de rupture d'un des tenons cylindriques 40, 40' de type spigot.

Ce mode de réalisation conduit à un encombrement en hauteur relativement important, ce qui tend à écarter la structure secondaire 24' du mât et le moteur 16 et, in fine, à impacter les performances aérodynamiques de l'aéronef.

La présente invention vise à remédier à tout ou partie des inconvénients de l'art antérieur. A cet effet, l'invention a pour objet un ensemble de propulsion comprenant
- un moteur,
- un mât qui comporte une structure primaire présentant une extrémité avant,
- au moins une attache-moteur qui relie le moteur et l'extrémité avant de la structure primaire et comporte une poutre transversale, une première liaison démontable reliant la poutre transversale et la structure primaire ainsi qu'une deuxième liaison reliant la poutre transversale et le moteur,
- la première liaison démontable comportant une première surface de contact solidaire de la poutre transversale, une deuxième surface de contact solidaire de la structure primaire, au moins un élément de liaison maintenant les première et deuxième surfaces de contact plaquées l'une contre l'autre ainsi qu'au moins un système de transmission d'efforts transversaux configuré pour assurer une transmission des efforts, orientés essentiellement selon une direction verticale, entre le moteur et la structure primaire.

Selon l'invention, la première liaison démontable comprend au moins une liaison de sécurité en attente distincte de chaque élément de liaison et configurée pour générer un chemin d'efforts additionnel uniquement en cas de dysfonctionnement d'un élément de la première liaison démontable, chaque liaison de sécurité en attente comprenant au moins une première forme solidaire de la poutre transversale et en saillie par rapport à la première surface de contact ainsi qu'au moins une deuxième forme solidaire de la structure primaire, en creux par rapport à la deuxième surface de contact et configurée pour loger la première forme, les première et deuxième formes coopérant l'une avec l'autre et présentant au moins un espacement entre elles selon la direction verticale. En complément, la première forme comprend un premier contour trapézoïdal qui présente des chants supérieur et inférieur sensiblement parallèles entre eux et perpendiculaires à la direction verticale ainsi que des chants obliques reliant les chants supérieur et inférieur.

En dissociant le (ou les) élément(s) de liaison et la (ou les) liaison(s) de sécurité en attente, il est possible de les optimiser indépendamment les uns des autres et de limiter leur encombrement selon la direction verticale. Ainsi, il est possible de rapprocher la structure secondaire du moteur afin d'optimiser les performances aérodynamiques de l'aéronef. Selon une autre caractéristique, le chant supérieur présente une longueur supérieure à celle du chant inférieur.

Selon une autre caractéristique, la première forme est une nervure suivant le premier contour trapézoïdal.

Selon une autre caractéristique, la deuxième forme comprend un deuxième contour approximativement trapézoïdal qui comprend des pans supérieur et inférieur sensiblement parallèles entre eux et perpendiculaires à la direction verticale ainsi que des pans obliques reliant les pans supérieur et inférieur, les pans supérieur et inférieur étant espacés d'une distance supérieure à celle séparant les chants supérieur et inférieur de la première forme. Selon une autre caractéristique, la première liaison démontable comprend deux systèmes de transmission d'efforts transversaux positionnés de manière symétrique par rapport à un plan médian vertical ainsi qu'une liaison de sécurité en attente positionnée entre les deux systèmes de transmission d'efforts transversaux et située au niveau du plan médian vertical.

Selon une autre caractéristique, la première liaison démontable comprend des première et deuxième extensions solidaires de la structure primaire qui s'étendent de part et d'autre de la structure primaire et présentent chacune une partie de la deuxième surface de contact, un système de transmission d'efforts transversaux étant positionné au niveau de chacune des première et deuxième extensions.

Selon une autre caractéristique, la première liaison démontable comprend un embout qui présente un corps tubulaire emmanché dans l'extrémité avant de la structure primaire et relié à la structure primaire, le corps tubulaire délimitant la deuxième forme en creux et présentant une face terminale qui forme la deuxième surface de contact.

Selon une autre caractéristique, l'embout comprend les première et deuxième extensions, le corps tubulaire et les première et deuxième extensions ne formant qu'une unique et même pièce.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- la figure 1 est une vue latérale d'un aéronef,
- la figure 2 est une vue latérale d'un ensemble de propulsion d'aéronef sans nacelle illustrant un mode de réalisation de l'art antérieur,
- la figure 3 est une vue en perspective d'une attache moteur avant illustrant un mode de réalisation de l'art antérieur,
- la figure 4 est une vue de face d'une attache-moteur avant illustrant un mode de réalisation de l'art antérieur,
- la figure 5 est une vue de face d'une attache-moteur avant illustrant un mode de réalisation de l'invention,
- la figure 6 est une vue en perspective d'une attache-moteur avant, à l'état démonté, illustrant un mode de réalisation de l'invention,
- la figure 7 est une vue en perspective d'une poutre transversale de l'attache-moteur avant visible sur la figure 6,
- la figure 8 est une coupe longitudinale d'une partie d'une attache-moteur avant illustrant un mode de réalisation de l'invention,
- la figure 9 est une représentation schématique de l'attache-moteur avant visible sur la figure 6 illustrant des chemins d'efforts.

Selon un mode de réalisation, un aéronef comprend au moins un ensemble de propulsion 50 positionné sous une voilure et relié à cette dernière. Chaque ensemble de propulsion 50 comprend un moteur 52 (représenté de manière schématique), une nacelle (non représentée) positionnée autour du moteur 52 ainsi qu'un mât 54 reliant le moteur 52 et la voilure.

Le mât 54 comprend une structure primaire 56 reliée au moteur 52 par au moins un système d'attache-moteur et à la voilure par au moins un système d'attache voilure ainsi qu'une structure secondaire 56' formant une enveloppe aérodynamique au-dessus de la structure primaire 56. La structure primaire 56 présente une extrémité avant 56.1 de la structure primaire 56, une paroi supérieure 56.2, une paroi inférieure 56.3 ainsi que des parois latérales 56.4, 56.5.

Le système d'attache-moteur comprend au moins une attache-moteur 58 reliant notamment l'extrémité avant 56.1 et le moteur 52. Bien entendu, le système d'attache-moteur peut comprendre d'autres attache-moteurs reliant la structure primaire 56 et le moteur 52.

Selon une configuration, cette attache-moteur 58 est conçue pour assurer un transfert des efforts, entre le moteur 52 et la structure primaire 56, orientés dans un plan transversal YZ (perpendiculaire à la direction longitudinale X).

Cette attache-moteur 58 comprend une poutre transversale 60, une première liaison démontable 62 reliant la poutre transversale 60 et la structure primaire 56 ainsi qu'une deuxième liaison démontable 64 reliant la poutre transversale 60 et le moteur 52.

Selon un mode de réalisation, la deuxième liaison démontable 64 comprend au moins une première manille à deux points 66, positionnée d'un premier côté du plan médian vertical PMV et reliée par une première articulation 66.1 à la poutre transversale 60 et par une deuxième articulation 66.2 au moteur 52, ainsi qu'une deuxième manille à trois points 68 positionnée d'un deuxième côté du plan médian vertical PMV et reliée par des première et deuxième articulations 68.1, 68.2 à la poutre transversale 60 et par une troisième articulation 68.3 au moteur 52. Selon une configuration, chacune des première, deuxième et troisième articulations 66.1, 66.2, 68.1, 68.2, 68.3 comprend un axe de pivotement sensiblement parallèle à la direction longitudinale X.

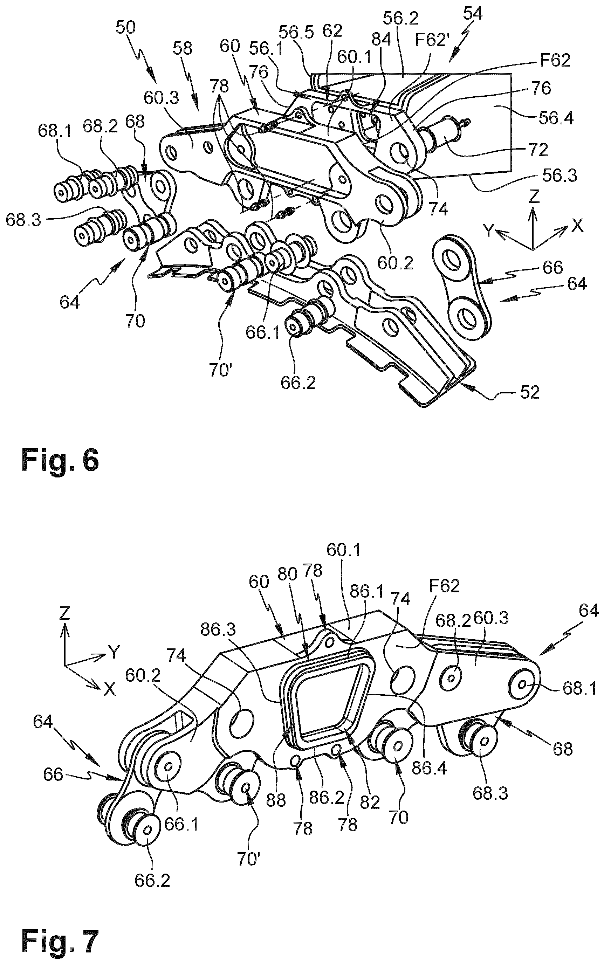

La deuxième liaison démontable 64 comprend généralement au moins une liaison de sécurité en attente 70 de type « waiting fail-safe », reliant la poutre transversale 60 et le moteur 52, configurée pour ne pas générer de chemin d'efforts lorsque la poutre transversale 60, les première et deuxième manilles 66, 68 et les articulations 66.1, 66.2, 68.1, 68.2, 68.3 sont en état de fonctionner et générer un chemin d'efforts additionnel uniquement en cas de défaillance d'au moins un élément parmi la poutre transversale 60, les première et deuxième manilles 66, 68 et les articulations 66.1, 66.2, 68.1, 68.2, 68.3. Selon une première conception visible sur la figure 5, la deuxième liaison démontable 64 comprend une unique liaison de sécurité en attente 70 de type « waiting fail-safe » située au niveau du plan médian vertical PMV. Selon une deuxième conception visible sur les figures 6, 7 et 9, la deuxième liaison démontable 64 comprend deux liaisons de sécurité en attente 70, 70' de type « waiting fail-safe » symétriques par rapport au plan médian vertical PMV.

La deuxième liaison démontable 64 n'est pas plus décrite car elle peut être identique à celles de l'art antérieur.

La poutre transversale 60 comprend une partie centrale 60.1 positionnée au moins en partie dans le prolongement de la structure primaire 56 ainsi que des première et deuxième branches 60.2, 60.3 positionnées de part et d'autre de la partie centrale 60.1 et reliées respectivement aux première et deuxième manilles 66, 68. Selon une configuration, chacune des première et deuxième branches 60.2, 60.3 comprend une chape coopérant avec la première ou deuxième manille 66, 68. Ces première et deuxième branches ne sont pas plus décrites car elles peuvent être identiques à celles de l'art antérieur.

La première liaison démontable 62 comprend une première surface de contact F62 solidaire de la poutre transversale 60 ainsi qu'une deuxième surface de contact F62' solidaire de la structure primaire 56, les première et deuxième surfaces de contact F62, F62' étant plaquées l'une contre l'autre et positionnées approximativement dans des plans transversaux.

La première surface de contact F62 correspond à une face arrière de la partie centrale 60.1 de la poutre transversale 60.

La première liaison démontable 62 comprend au moins un tenon 72 de type spigot, solidaire d'un premier élément parmi la structure primaire 56 et la poutre transversale 60, ainsi qu'au moins un logement 74 configuré pour loger de manière ajustée (sans jeu dans un plan transversal) le tenon 72 et solidaire d'un deuxième élément différent du premier élément parmi la structure primaire 56 et la poutre transversale 60. Chacun des tenons et logements 72, 74 présente une face latérale sensiblement parallèle à la direction longitudinale X. Selon une configuration, les tenons et les logements 72, 74 sont cylindriques et présentent chacun un axe de révolution sensiblement parallèle à la direction longitudinale X. Selon un agencement, chaque tenon 72 est solidaire de la poutre transversale 60 et chaque logement 74 est solidaire de la structure primaire 56. Chaque tenon 72 est en saillie par rapport à la première surface de contact F62 et chaque logement 74 est en creux par rapport à la deuxième surface de contact F62'.

Selon un agencement, la première liaison démontable 62 comprend deux couples, comprenant chacun un tenon 72 et un logement 74, positionnés de part et d'autre du plan médian vertical PMV, de préférence symétriques par rapport au plan médian vertical PMV. Selon une configuration, la partie centrale 60.1 s'étend de part et d'autre des parois latérales 56.4, 56.5 de la structure primaire 56. Ainsi, la première surface de contact F62 s'étend de part et d'autre des parois latérales 56.4, 56.5 de la structure primaire 56. Selon cette configuration, la première liaison démontable 62 comprend des première et deuxième extensions 76, solidaires de la structure primaire 56, qui s'étendent de part et d'autre de la structure primaire 56 et présentent chacune une partie de la deuxième surface de contact F62'. Ainsi, en fonctionnement, chacune des première et deuxième extensions 76 présente une face (correspondant à une partie de la deuxième surface de contact F62') en contact avec une face (correspondant à une partie de la première surface de contact F62) de la partie centrale 60.1 de la poutre transversale 60. Selon cette configuration, chacune des première et deuxième extensions 76 comprend un logement 74 configuré pour recevoir un tenon 72 solidaire de la poutre transversale 60.

Bien entendu, l'invention n'est pas limitée à cette configuration concernant le nombre et l'agencement du ou des tenons(s) 72 et du ou des logement(s) 74. Quel que soit le mode de réalisation, la première liaison démontable 62 comprend au moins un système de transmission d'efforts transversaux 72/74 configuré pour assurer une transmission des efforts orientés essentiellement verticalement (parallèlement à la direction verticale Z). A titre d'exemple, chaque système de transmission d'efforts transversaux 72/74 comprend un couple composé d'un tenon 72 et d'un logement 74. Selon un agencement privilégié, la première liaison démontable 62 comprend deux systèmes de transmission d'efforts transversaux 72/74 positionnés de manière symétrique par rapport au plan médian vertical PMV.

La première liaison démontable 62 comprend au moins un élément de liaison 78 maintenant les première et deuxième surfaces de contact F62, F62' plaquées l'une contre l'autre. Selon un mode de réalisation, chaque élément de liaison 78 est une vis, un boulon ou un rivet et comprend une tige présentant un axe sensiblement parallèle à la direction longitudinale X. Selon une configuration, la première liaison démontable 62 comprend plusieurs éléments de liaison 78 positionnés de manière symétrique par rapport au plan médian vertical PMV et répartis en périphérie de la partie centrale 60.1 de la poutre transversale 60.

Selon une particularité de l'invention, le (ou les) élément(s) de liaison 78 est (sont) configuré(s) pour assurer une reprise des efforts selon la direction longitudinale X afin de maintenir les première et deuxième surfaces de contact F62, F62' plaquées l'une contre l'autre et non des efforts de cisaillement dans un plan transversal. Par conséquent, chaque élément de liaison 78 présente une section transversale (dans un plan transversal) réduite correspondant à un faible encombrement selon la direction verticale ou en hauteur.

La première liaison démontable 62 comprend au moins une liaison de sécurité en attente 80 de type « waiting fail-safe » configurée pour ne pas générer de chemins d'efforts lorsqu'aucun système de transmission d'efforts transversaux 72/74 n'est endommagé et générer un chemin d'efforts additionnel reprenant des efforts dans un plan transversal, notamment verticaux (orientés selon la direction verticale Z) uniquement en cas de dysfonctionnement d'un élément de la première liaison démontable 62, notamment lorsqu'au moins un système de transmission d'efforts transversaux 72/74 est défectueux et/ou endommagé, cette liaison de sécurité en attente 80 étant distincte de chaque élément de liaison 78.

Cette liaison de sécurité en attente 80 n'est pas configurée pour assurer le maintien des première et deuxième surfaces de contact F62, F62' plaquées l'une contre l'autre.

Selon un agencement, chaque liaison de sécurité en attente 80 est positionnée approximativement à une même hauteur que le (ou les) système(s) de transmission d'efforts transversaux 72/74. En présence de deux système(s) de transmission d'efforts transversaux 72/74, la première liaison démontable 62 comprend une liaison de sécurité en attente 80 positionnée entre les deux système(s) de transmission d'efforts transversaux 72/74et située au niveau du plan médian vertical PMV .

Le fait que la liaison de sécurité en attente 80 soit positionnée entre les deux système(s) de transmission d'efforts transversaux 72/74 et sensiblement à la même hauteur qu'eux permet d'obtenir un faible encombrement selon la direction verticale Z (en hauteur).

Selon un mode de réalisation, chaque liaison de sécurité en attente 80 comprend au moins une première forme 82 solidaire de la poutre transversale 60 et en relief par rapport à la première surface de contact F62 ainsi qu'au moins une deuxième forme 84 solidaire de la structure primaire 56 et en relief par rapport à la deuxième surface de contact F62', les première et deuxième formes 82, 84 coopérant l'une avec l'autre et présentant au moins un espacement E entre elles selon la direction verticale Z. Selon une première variante, la première forme 82 est en saillie par rapport à la première surface de contact F62 et la deuxième forme 84 est en creux par rapport à la deuxième surface de contact F62' et configurée pour loger la première forme 82. Selon une deuxième variante, la première forme 82 est en creux par rapport à la première surface de contact F62 et la deuxième forme 84 est en saillie par rapport à la deuxième surface de contact F62' et configurée pour se loger dans la première forme 82.

L'espacement E est supérieur à 1 mm et de l'ordre de quelques millimètres.

Selon une configuration, la première forme 82 est une excroissance et comprend un premier contour trapézoïdal qui présente des chants supérieur et inférieur 86.1, 86.2, opposés, sensiblement parallèles entre eux et perpendiculaires à la direction verticale Z ainsi que des chants obliques 86.3, 86.4, reliant les chants supérieur et inférieur 86.1, 86.2, sensiblement symétriques par rapport au plan médian vertical PMV. Selon un agencement, le chant supérieur 86.1 présente une longueur (distance mesurée selon la direction transversale et horizontale Y) supérieure à celle du chant inférieur 86.2. Selon un mode de réalisation, la première forme 82 est une nervure 88, solidaire de la poutre transversale 60 et en saillie par rapport à la première surface de contact F62, qui suit le premier contour trapézoïdal.

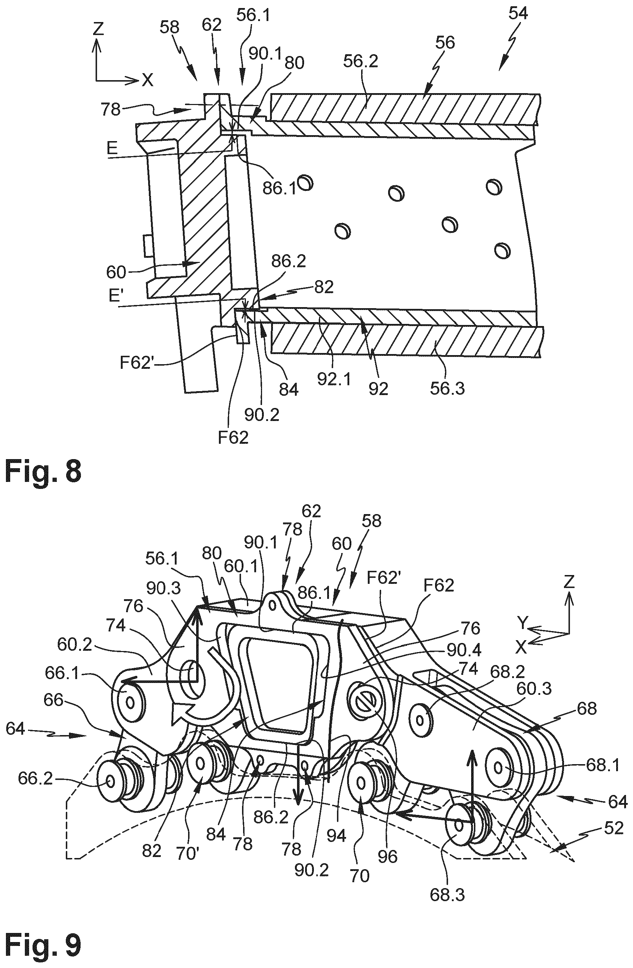

En complément, la deuxième forme 84 comprend un deuxième contour approximativement trapézoïdal qui comprend des pans supérieur et inférieur 90.1, 90.2 sensiblement parallèles entre eux et perpendiculaires à la direction verticale Z ainsi que des pans obliques 90.3, 90.4 reliant les pans supérieur et inférieur 90.1, 90.2 et sensiblement symétriques par rapport au plan médian vertical PMV, les pans supérieur et inférieur 90.1, 90.2 étant espacés d'une distance supérieure à celle séparant les chants supérieur et inférieur 86.1, 86.2 de la première forme 82. Comme illustré sur la figure 8, les pans supérieur et inférieur 90.1, 90.2 sont respectivement sensiblement parallèles aux chants supérieur et inférieur 86.1, 86.2 et espacés de ces derniers. Ainsi, la première liaison démontable 62 comprend un premier espacement E entre les chant et pan supérieurs 86.1, 90.1 ainsi qu'un deuxième espacement E' entre les chant et pan inférieurs 86.2, 90.2.

Selon un mode de réalisation, la première liaison démontable 62 comprend un embout 92 qui présente un corps tubulaire 92.1 emmanché dans l'extrémité avant 56.1 de la structure primaire 56, positionné entre les parois supérieure, inférieure et latérale 56.2, 56.3, 56.4, 56.5 et relié à la structure primaire 56, plus particulièrement à au moins une des parois supérieure, inférieure et latérale 56.2, 56.3, 56.4, 56.5 ; ce corps tubulaire 92.1 délimitant la deuxième forme 84 en creux et présentant une face terminale qui forme la deuxième surface de contact F62'. Selon une configuration, l'embout 92 comprend des première et deuxième extensions 76 reliées au corps tubulaire 92.1 au niveau de chacune desquelles est positionné un système de transmission d'efforts transversaux 72/74, le corps tubulaire 92.1 et les première et deuxième extensions 76 ne formant qu'une unique et même pièce.

Comme illustré sur la figure 8, lorsque ni la poutre transversale 60 ni les systèmes de transmission d'efforts transversaux 72/74 ne sont endommagés, les première et deuxième formes 82, 84 sont espacées entre elles selon la direction verticale Z si bien que la liaison de sécurité en attente 80 ne forme pas de chemins d'efforts entre le moteur 52 et la structure primaire 56.

Lorsque la poutre transversale 60 présente un endommagement 94 entre la liaison de sécurité en attente 80 et l'un des systèmes de transmission d'efforts transversaux 72/74 et/ou l'un des systèmes de transmission d'efforts transversaux 72/74 présente un endommagement 96, les première et deuxième formes 82, 84 sont en contact l'une avec l'autre et la liaison de sécurité en attente 80 forme un chemin d'efforts entre le moteur 52 et la structure primaire 56. Contrairement à l'art antérieur, le (ou les) élément(s) de liaison 78 n'assure(nt) que le maintien des première et deuxième surfaces de contact F62, F62' l'une contre l'autre et n'assure(nt), pas la fonction de liaison de sécurité en attente. Par conséquent, il présente une section réduite dans un plan transversal.

Le fait de dissocier le (ou les) élément(s) de liaison 78 et la (ou les) liaison(s) de sécurité en attente 80 permet d'optimiser chacun d'eux et de limiter leur encombrement en hauteur selon la direction verticale Z. Ainsi, comme illustré sur la figure 5, il est possible de rapprocher la structure secondaire 56' du moteur 52 (contrairement à une structure secondaire 98 d'un mât de l'art antérieur) afin d'optimiser les performances aérodynamiques de l'aéronef.

Le fait de prévoir un système de transmission d'efforts transversaux 72/74 au niveau de chacune des extensions 76 permet d'écarter le plus possible les systèmes de transmission d'efforts transversaux 72/74, favorisant le positionnement d'une liaison de sécurité en attente 80 entre lesdits systèmes de transmission d'efforts transversaux 72/74.

## Revendications

1. Ensemble de propulsion comprenant un moteur (52), un mât (54) qui comporte une structure primaire (56), présentant une extrémité avant (56.1), ainsi qu'au moins une attache-moteur (58) qui relie le moteur (52) et l'extrémité avant (56.1) de la structure primaire (56) et comporte une poutre transversale (60), une première liaison démontable (62) reliant la poutre transversale (60) et la structure primaire (56) ainsi qu'une deuxième liaison (64) reliant la poutre transversale (60) et le moteur (52), la première liaison démontable (62) comportant une première surface de contact (F62) solidaire de la poutre transversale (60), une deuxième surface de contact (F62') solidaire de la structure primaire (56), au moins un élément de liaison (78) maintenant les première et deuxième surfaces de contact (F62, F62') plaquées l'une contre l'autre ainsi qu'au moins un système de transmission d'efforts transversaux (72/74) configuré pour assurer une transmission des efforts, orientés essentiellement selon une direction verticale (Z), entre le moteur (52) et la structure primaire (56) ; **caractérisé en ce que** la première liaison démontable (62) comprend au moins une liaison de sécurité en attente (80) distincte de chaque élément de liaison (78) et configurée pour générer un chemin d'efforts additionnel uniquement en cas de dysfonctionnement d'un élément de la première liaison démontable (62), **en ce que** chaque liaison de sécurité en attente (80) comprend au moins une première forme (82) solidaire de la poutre transversale (60) et en saillie par rapport à la première surface de contact (F62) ainsi qu'au moins une deuxième forme (84) solidaire de la structure primaire (56), en creux par rapport à la deuxième surface de contact (F62') et configurée pour loger la première forme (82), les première et deuxième formes (82, 84) coopérant l'une avec l'autre et présentant au moins un espacement (E) entre elles selon la direction verticale (Z) et **en ce que** la première forme (82) comprend un premier contour trapézoïdal qui présente des chants supérieur et inférieur (86.1, 86.2) sensiblement parallèles entre eux et perpendiculaires à la direction verticale (Z) ainsi que des chants obliques (86.3, 86.4) reliant les chants supérieur et inférieur (86.1, 86.2).

2. Ensemble de propulsion selon la revendication précédente, **caractérisé en ce que** le chant supérieur (86.1) présente une longueur supérieure à celle du chant inférieur (86.2).

3. Ensemble de propulsion selon l'une des revendications précédentes, **caractérisé en ce que** la première forme (82) est une nervure (88) suivant le premier contour trapézoïdal.

4. Ensemble de propulsion selon l'une des revendications précédentes, **caractérisé en ce que** la deuxième forme (84) comprend un deuxième contour approximativement trapézoïdal qui comprend des pans supérieur et inférieur (90.1, 90.2) sensiblement parallèles entre eux et perpendiculaires à la direction verticale (Z) ainsi que des pans obliques (90.3, 90.4) reliant les pans supérieur et inférieur (90.1, 90.2), les pans supérieur et inférieur (90.1, 90.2) étant espacés d'une distance supérieure à celle séparant les chants supérieur et inférieur (86.1, 86.2) de la première forme (82).

5. Ensemble de propulsion selon l'une des revendications précédentes, **caractérisé en ce que** la première liaison démontable (62) comprend deux systèmes de transmission d'efforts transversaux (72/74) positionnés de manière symétrique par rapport à un plan médian vertical (PMV) ainsi qu'une liaison de sécurité en attente (80) positionnée entre les deux systèmes de transmission d'efforts transversaux (72/74) et située au niveau du plan médian vertical (PMV).

6. Ensemble de propulsion selon l'une des revendications précédentes, **caractérisé en ce que** la première liaison démontable (62) comprend des première et deuxième extensions (76), solidaires de la structure primaire (56), qui s'étendent de part et d'autre de la structure primaire (56) et présentent chacune une partie de la deuxième surface de contact (F62'), un système de transmission d'efforts transversaux (72/74) étant positionné au niveau de chacune des première et deuxième extensions (76).

7. Ensemble de propulsion selon l'une des revendications précédentes, **caractérisé en ce que** la première liaison démontable (62) comprend un embout (92) qui présente un corps tubulaire (92.1) emmanché dans l'extrémité avant (56.1) de la structure primaire (56) et relié à la structure primaire (56), le corps tubulaire (92.1) délimitant la deuxième forme (84) en creux et présentant une face terminale qui forme la deuxième surface de contact (F62').

8. Ensemble de propulsion selon les revendications 6 et 7, **caractérisé en ce que** l'embout (92) comprend les première et deuxième extensions (76), le corps tubulaire (92.1) et les première et deuxième extensions (76) ne formant qu'une unique et même pièce.

9. Aéronef comprenant au moins un ensemble de propulsion selon l'une des revendications précédentes.
